# EUROPEAN PATENT APPLICATION

(11) **EP 4 782 656 A1**
(43) Date of publication of application: **29.07.2026**
(21) Application number: 26152283.3
(22) Date of filing: 16.01.2026
(51) Int. Cl.: F01D 11/00, F16J 15/44

(54) **METHOD FOR REDUCING ADHESIVE DAMAGE DUE TO LOSS OF LUBRICATION IN AEROSPACE PISTON RINGS**

(30) Priority: 22.01.2025 US 202519033712
(71) Applicant: RTX Corporation, Farmington, CT 06032 (US)
(72) Inventor: Makowiec, Mary E., Manchester, 06042 (US)
(74) Representative: Schmitt-Nilson Schraud Waibel Wohlfrom Patentanwälte Partnerschaft mbB

(57) **Abstract**

An aerospace piston seal ring including a body shaped as an annular ring, the body defines an axis centered within the body; a sealing surface extending radially relative to the axis between an inner diameter and an outer diameter; and a surface feature formed along the sealing surface, the surface feature configured as an interruption in the sealing surface, wherein the surface feature is configured to contain a lubricant.

## Description

The present disclosure is directed to the improved aerospace piston seal ring.

The existing gas turbine engine architecture currently utilizes an aerospace piston seal ring at various rotating interface boundaries. The piston seal ring design intent is to provide for secondary air flow sealing in locations such as the high pressure turbine static compartment. A secondary function of the piston seal ring is to accommodate large deflections while maintaining the air sealing capabilities in a high temperature environment. As a result of the high air and temperature operating environment, the piston seal rings have been observed with high wear and also show evidence of circumferential motion during engine operation. These seals are currently experiencing excessive wear in the field due to significant relative motion.

The piston seal rings are oil lubricated in aerospace engines. However, there are sometimes parts of the flight cycle where the lubrication may be lost or significantly reduced. Since piston seal rings and their supports are often made out of similar metals, they are prone to galling or adhesion when their surfaces come into direct contact. Currently, neither surface in many piston seal rings are textured in any way. Piston seal rings have a fairly fine surface finish to prevent oil leakage around the rings, but a finer surface finish can also make a surface more prone to galling.

In accordance with the present disclosure, there is provided an aerospace piston seal ring comprising a body shaped as an annular ring, the body defines an axis centered within the body; a sealing surface extending radially relative to the axis between an inner diameter and an outer diameter; and a surface feature formed along the sealing surface, the surface feature configured as an interruption in the sealing surface, wherein the surface feature is configured to contain a lubricant.

Particular embodiments further may include at least one, or a plurality of, the following optional features, alone or in combination with each other:

A further embodiment of any of the foregoing embodiments may additionally and/or alternatively include the surface feature is a well for the lubricant to build up into reservoirs to aid in lubrication of the sealing surface to prevent galling between the sealing surface and a component of a gas turbine engine contacting the sealing surface.

A further embodiment of any of the foregoing embodiments may additionally and/or alternatively include the sealing surface is configured to contact with a seal seat of a component of a gas turbine engine.

A further embodiment of any of the foregoing embodiments may additionally and/or alternatively include the surface feature comprises at least one of a dimple, a groove, a divot, a channel, a cavity, or any surface discontinuity capable of containing the lubricant, and the like.

A further embodiment of any of the foregoing embodiments may additionally and/or alternatively include the surface feature comprises patterns formed in at least one of rows, rings, and the like.

A further embodiment of any of the foregoing embodiments may additionally and/or alternatively include the surface feature comprises a pattern configured as a lubrication affective zone.

A further embodiment of any of the foregoing embodiments may additionally and/or alternatively include the lubrication affective zone is configured to spread the lubricant beyond a location of the surface feature.

In accordance with the present disclosure, there is provided an aerospace piston seal ring for a gas turbine engine comprising: a body shaped as an annular ring, the body defines an axis centered within the body; a sealing surface extending radially relative to the axis between an inner diameter and an outer diameter; and a surface feature formed along the sealing surface, the surface feature configured as an interruption in the sealing surface, wherein the surface feature is configured to contain a lubricant, wherein the surface feature comprises a well for the lubricant to build up to aid in lubrication of the sealing surface to prevent galling between the sealing surface and a component of the gas turbine engine contacting the sealing surface.

Particular embodiments further may include at least one, or a plurality of, the following optional features, alone or in combination with each other:

A further embodiment of any of the foregoing embodiments may additionally and/or alternatively include the aerospace piston seal ring is seated between a casing mount with seal seats and a turbine frame static structure with seal seats.

A further embodiment of any of the foregoing embodiments may additionally and/or alternatively include the surface feature comprises a pattern configured as a lubrication affective zone.

A further embodiment of any of the foregoing embodiments may additionally and/or alternatively include the lubrication affective zone is configured to spread the lubricant beyond a location of the surface feature.

A further embodiment of any of the foregoing embodiments may additionally and/or alternatively include the surface feature includes a depth dimension, the depth dimension penetrates the seal surface.

A further embodiment of any of the foregoing embodiments may additionally and/or alternatively include the depth dimension comprises from about 0.000010 inch to about 0.005 inch.

In accordance with the present disclosure, there is provided a process for lubrication of an aerospace piston seal ring for a gas turbine engine comprising: forming a body shaped as an annular ring, the body defines an axis centered within the body; forming a sealing surface extending radially relative to the axis between an inner diameter and an outer diameter; and forming a surface feature along the sealing surface; configuring the surface feature as an interruption in the sealing surface; configuring the surface feature to contain a lubricant, wherein the surface feature comprises a well for the lubricant to build up to aid in lubrication of the sealing surface; and preventing galling between the sealing surface and a component of the gas turbine engine contacting the sealing surface.

Particular embodiments further may include at least one, or a plurality of, the following optional features, alone or in combination with each other:

A further embodiment of any of the foregoing embodiments may additionally and/or alternatively include the process further comprising seating the aerospace piston seal ring between a casing mount with a seal seat and a turbine frame static structure with a seal seat.

A further embodiment of any of the foregoing embodiments may additionally and/or alternatively include the process further comprising configuring the surface feature as a pattern configured as a lubrication affective zone.

A further embodiment of any of the foregoing embodiments may additionally and/or alternatively include the process further comprising configuring the lubrication affective zone to spread the lubricant beyond a location of the surface feature.

A further embodiment of any of the foregoing embodiments may additionally and/or alternatively include the process further comprising forming the lubrication affective zone as 75 percent of the sealing surface total area of the piston seal ring.

A further embodiment of any of the foregoing embodiments may additionally and/or alternatively include the process further comprising forming the surface feature comprising a depth dimension, the depth dimension penetrates the seal surface.

A further embodiment of any of the foregoing embodiments may additionally and/or alternatively include the process further comprising forming the surface feature as patterns formed in at least one of rows, rings, and the like.

Other details of the aerospace piston seal ring are set forth in the following detailed description and the accompanying drawings wherein like reference numerals depict like elements.

The above and further advantages of this disclosure may be better understood by referring to the following description in conjunction with the accompanying drawings, in which like reference numerals indicate like elements and features in the various figures. Letters may be appended to reference numbers to distinguish from reference numbers for similar features and to indicate a correspondence to other features in the drawings. For clarity, not every element may be labeled in every figure. The drawings are not necessarily to scale, emphasis instead being placed upon illustrating the principles of the disclosure.
Fig. 1 is a cross section view of an exemplary gas turbine engine.
Fig. 2 is a cross section schematic representation of an exemplary aerospace piston seal ring separating an engine compartment.
Fig. 3 is a schematic representation of an exemplary aerospace piston seal ring.
Fig. 4 is a schematic representation of an exemplary aerospace piston seal ring.
Fig. 5 is a schematic representation of an exemplary aerospace piston seal ring.
Fig. 6 is a schematic representation of exemplary an exemplary aerospace piston seal ring.

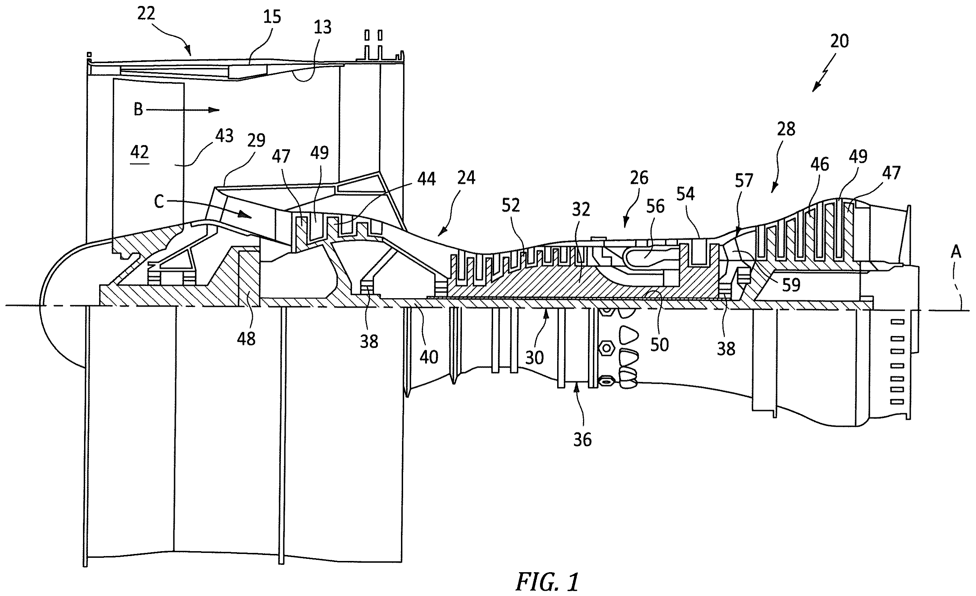

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of static vanes adjacent the rotatable airfoils. The rotatable airfoils and vanes are schematically indicated at 47 and 49.

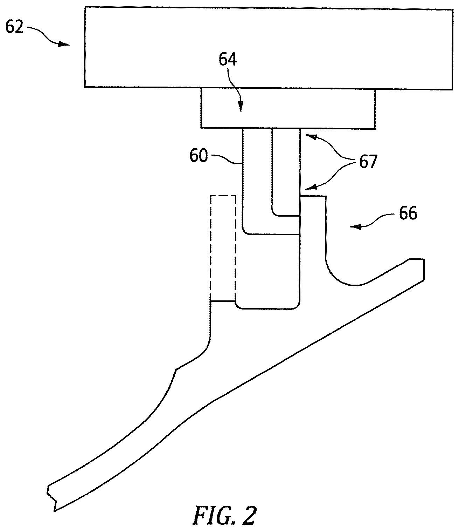

Referring also to Fig. 2 an exemplary aerospace piston seal ring or simply piston seal ring 60 separating an engine compartment 62. The piston seal ring 60 can be seated between a casing mount 64 and a turbine frame static structure 66 with seal seats 67. The piston seal ring 60 is configured to provide secondary air flow sealing in the engine compartment 62 between the casing mount 64 and turbine frame static structure 66. There can be two types of piston seal ring 60 one is secondary, as described here, the second style of piston seal ring 60 is a damper style, which sits along a shaft and provide damping as part of bearing assemblies. These piston seal rings 60 are typically submerged in oil, but can lose lubrication during parts of the flight cycle.

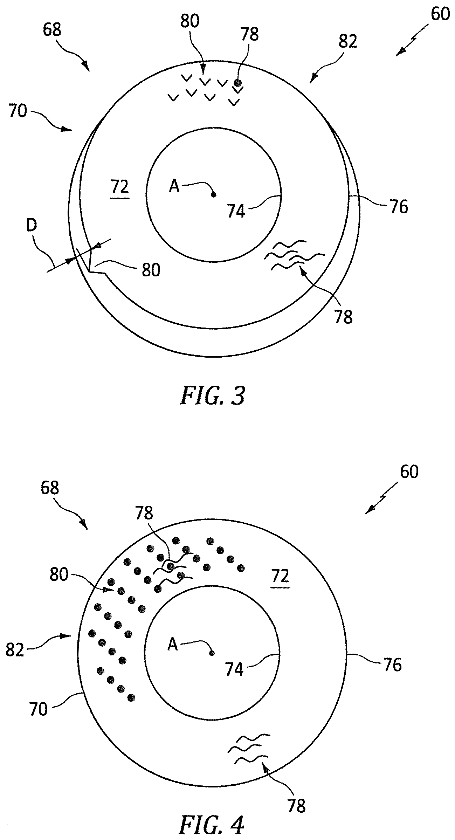

Referring also to Fig. 3, Fig. 4, Fig. 5, and Fig. 6, an exemplary piston seal ring 60 is shown. The piston seal ring 60 includes a body 68 shaped as an annular ring 70. The piston seal ring 60 defines an axis A centered within the body 68. The piston seal ring 60 includes a sealing surface 72 extending radially relative to the axis A between an inner diameter 74 and an outer diameter 76. The sealing surface 72 can be configured to contact with the seal seat 67 of another component of the gas turbine engine 20, such as the case mount 64 or the turbine frame static structure 66 and the like.

The contact with another component of the gas turbine engine 20 can be protected by use of lubricant 78, such as oil. The lubricant 78 can be disposed on the surface 72 of the piston seal ring 60. The lubricant 78 can be configured to lubricate the sealing surface 72 responsive to contact and motion between the sealing surface 72 and the seal seat 67 of the component of the gas turbine engine 20 that comes into contact with the sealing surface 72.

The piston seal ring 60 includes a surface feature(s) 80 formed along the sealing surface 72. The surface feature 80 can be configured as an interruption in the sealing surface 72. The surface feature 80 can be configured to contain the lubricant 78. The surface feature 80 can act as a well for lubricant 78 to build up into reservoirs to aid in lubrication of the sealing surface 72 to prevent galling between the sealing surface 72 and the component of the gas turbine engine 20 contacting the sealing surface 72.

The surface feature 80 can be configured as a dimple, groove, divot, channel, cavity, or any surface discontinuity capable of containing lubricant 78 and the like.

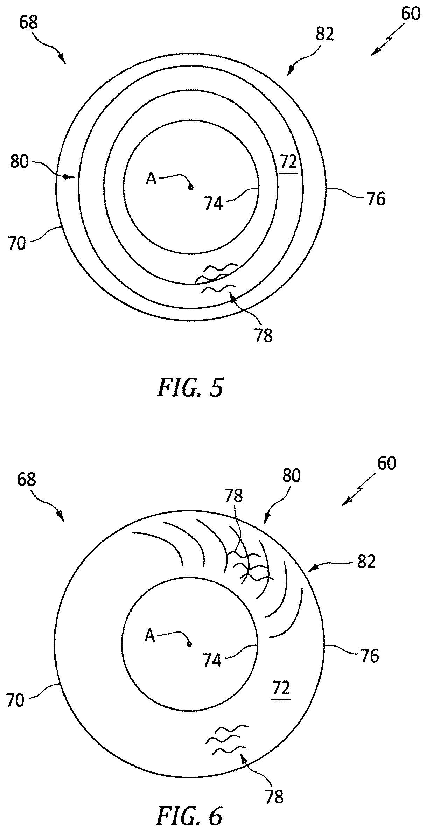

The surface feature 80 can be formed into patterns, rows, rings, and the like configured to create a lubrication affective zone 82. The patterns of the lubrication affective zone(s) 82 can include concentric grooves, seen in Fig. 5, a pattern of round holes seen in Fig. 4, or possibly curved arcs seen in Fig. 6, all with the aim of reducing the possibility of leaking lubricant 78. Each of these patterns would be repeated across the whole sealing surface 72. The lubrication affective zone 82 can be understood to be an area of the sealing surface 72 proximate the surface feature 80 that can be lubricated by the presence of lubricant 78. The lubricant 78 can cover a portion of the entire sealing surface 72 in order to provide lubrication. The lubrication affective zone 82 can be a percentage of the total sealing surface 72. In an exemplary embodiment the lubrication affective zone 82 can include 75 percent in total area of the sealing surface 72 of the piston seal ring 60. The lubrication affective zone 82 can contribute to spreading the lubricant 78 beyond the location of any single surface feature 80.

In an exemplary embodiment, the lubrication affective zone 82 can have an area of from about 2.75 times to about 3 times the area of the sealing surface 72 covered by the surface feature 80 formed in the sealing surface 72.

The surface feature(s) 80 can include a depth D dimension. The depth D is the dimension that the surface feature 80 penetrates the seal surface 72. The depth dimension D can be from about 0.000010 inch to about 0.005 inch.

The surface feature 80 can be configured to remove the probability for galling the piston seal ring 60 and seal seats 67 of the components that contact the piston seal ring 60. There are likely two failure modes that cause galling, the primary one being loss of lubrication at the interface between the sealing surface 72 and the seal seats 67 of the components that contact the piston seal ring 60, the second one being a stress build-up due to a too smooth seal surface 72. The surface feature 80 can influence reducing both failure modes of galling.

The surface feature(s) 80 can be formed by a fabrication method including, but not limited to laser etching, chemical etching, or shot/vibro-peening.

If the sealing surface 72 is uncoated, this procedure can be completed during the finishing steps of the piston seal ring 60. If the sealing surface 72 is coated, both the required coating depth and the preservation of the surface feature 80 can be factored in to ensure both requirements for the piston seal ring 60 were met. Since the surface feature 80 is relatively shallow, the surface feature 80 can be formed after the piston seal ring 60 is coated and finish ground.

A technical advantage of the disclosed aerospace piston seal ring includes adding small wells for oil lubrication to build up into reservoirs to aid in surface lubrication and prevent galling between the piston seal ring and mating surfaces.

Another technical advantage of the disclosed aerospace piston seal ring includes the capacity to prevent leakage of oil by forming the surface features.

Another technical advantage of the disclosed aerospace piston seal ring includes forming surface features in the sealing surface of the piston seal ring so that the surface features do not penetrate the full circumference of the part but would consist of small grooves or circles within the part.

Another technical advantage of the disclosed aerospace piston seal ring includes the capacity to reduce the amount of galling occurring on the piston seal ring which is beneficial for the mating surface.

Another technical advantage of the disclosed aerospace piston seal ring includes the condition wherein the piston seal rings are consumable parts, which are regularly replaced at servicing intervals. However, the parts which they seal against are typically significantly more expensive. Employing the surface features prevents the high amounts of wear which can lead to costly repairs or replacements of these parts.

Another technical advantage of the disclosed aerospace piston seal ring includes reducing the incidence of necessary repairs or replacements by employing the surface features and lubrication affected zone to create a reservoir of oil to maintain surface lubrication and reduce the likelihood of galling.

There has been provided an aerospace piston seal ring. While the aerospace piston seal ring has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An aerospace piston seal ring comprising:
a body shaped as an annular ring, the body defines an axis centered within the body;
a sealing surface extending radially relative to the axis between an inner diameter and an outer diameter; and
a surface feature formed along the sealing surface, the surface feature configured as an interruption in the sealing surface, wherein the surface feature is configured to contain a lubricant.

2. The aerospace piston seal ring according to claim 1,
wherein the surface feature is a well for the lubricant to build up into reservoirs to aid in lubrication of the sealing surface to prevent galling between the sealing surface and a component of a gas turbine engine contacting the sealing surface.

3. The aerospace piston seal ring according to claim 1 or 2,
wherein the sealing surface is configured to contact with a seal seat of a component of a gas turbine engine.

4. The aerospace piston seal ring according to any of claims 1 to 3,
wherein the surface feature comprises at least one of a dimple, a groove, a divot, a channel, a cavity, or any surface discontinuity capable of containing the lubricant, and the like.

5. The aerospace piston seal ring according to any of claims 1 to 4,
wherein the surface feature comprises patterns formed in at least one of rows, rings, and the like.

6. The aerospace piston seal ring according to any of claims 1 to 5,
wherein the surface feature comprises a pattern configured as a lubrication affective zone.

7. The aerospace piston seal ring according to claim 6,
wherein the lubrication affective zone is configured to spread the lubricant beyond a location of the surface feature.

8. The aerospace piston seal ring according to any of claims 1 to 7,
wherein the aerospace piston seal ring is configured for a gas turbine engine.

9. The aerospace piston seal ring according to any of claims 1 to 8,
wherein the aerospace piston seal ring is seated between a casing mount with seal seats and a turbine frame static structure with seal seats; and/or
wherein the surface feature comprises a pattern configured as a lubrication affective zone.

10. The aerospace piston seal ring according to claim 9,
wherein the lubrication affective zone is configured to spread the lubricant beyond a location of the surface feature.

11. The aerospace piston seal ring according to any of claims 1 to 10,
wherein the surface feature includes a depth dimension, the depth dimension penetrates the seal surface; and/or
wherein the depth dimension comprises from about 0.000010 inch to about 0.005 inch.

12. A process for lubrication of an aerospace piston seal ring for a gas turbine engine comprising:
forming a body shaped as an annular ring, the body defines an axis centered within the body;
forming a sealing surface extending radially relative to the axis between an inner diameter and an outer diameter; and
forming a surface feature along the sealing surface;
configuring the surface feature as an interruption in the sealing surface;
configuring the surface feature to contain a lubricant, wherein the surface feature comprises a well for the lubricant to build up to aid in lubrication of the sealing surface; and
preventing galling between the sealing surface and a component of the gas turbine engine contacting the sealing surface.

13. The process according to claim 12,
further comprising:
seating the aerospace piston seal ring between a casing mount with a seal seat and a turbine frame static structure with a seal seat; and/or
further comprising:
configuring the surface feature as a pattern configured as a lubrication affective zone.

14. The process according to claim 12 or 13,
further comprising:
configuring the lubrication affective zone to spread the lubricant beyond a location of the surface feature; and/or
further comprising:
forming the lubrication affective zone as 75 percent of the sealing surface total area of the piston seal ring.

15. The process according to any of claims 12 to 14,
further comprising:
forming the surface feature comprising a depth dimension, the depth dimension penetrates the seal surface; and/or
further comprising:
forming the surface feature as patterns formed in at least one of rows, rings, and the like.
